# EUROPEAN PATENT APPLICATION

(11) **EP 1 350 677 A2**
(43) Date of publication of application: **08.10.2003**
(21) Application number: 03006913.2
(22) Date of filing: 26.03.2003
(51) Int. Cl.: B60R 13/01, B60R 13/08, B60P 3/20, B62D 33/04, B60H 1/32

(54) **Easily removable fitting for insulating a van**

(30) Priority: 27.03.2002 IT BO20020156
(71) Applicant: Parc di Fabbri Primo & C. Sas, 47023 Cesena (FC) (IT)
(72) Inventor: Fabbri, Marcello, 47023 Cesena (FC) (IT)
(74) Representative: Provvisionato, Paolo

(57) **Abstract**

The present invention relates to a system of components for rapidly converting a moderately small-sized van into an insulated vehicle with excellent characteristics and maximum useful capacity, by the use of highly insulated shaped modules or elements (1,5,6,7,11) which can be fitted by interlocking, and additionally by the use of a unit (36) which enables the propulsion engine (37) to be started automatically in a fully secure way under the control of a thermostat (34), even when the vehicle is stationary and unmanned. The fitting consisting of insulated elements can also be removed rapidly if the vehicle has to be restored to its original factory condition.

## Description

The present invention relates to a fitting for an insulated van or motor vehicle, and to a motor vehicle to which this fitting is applied.

The invention has been devised particularly, but not exclusively, for application to a small insulated van whose characteristics can be made to match those of larger vehicles, in terms of no-power operation and assured correct control of the refrigeration chain, as a result of the characteristics of special prefabricated modules which are compatible with rapid fitting and removal, combined if necessary with the automatic starting of the propulsion engine, thus enabling the specified temperatures to be maintained even when the vehicle is unmanned, without any need for an independent auxiliary engine such as those normally provided in larger vehicles.

Many types of small insulated vans, designed for distributing frozen or chilled food to urban shops, are known in the prior art; these are characterized by compactness and manoeuvrability, which are essential for urban traffic. These known types of vehicle are sometimes produced by combining a parallelepipedal insulated chamber with the chassis of a small van, and more commonly by converting ordinary small vans whose walls, roof, ceiling and doors are insulated with glass-reinforced plastic and insulating slabs.

In other embodiments, the insulation is provided by injecting foam which fills the cavity created by the insertion of a box consisting of the inner walls of the cold chamber.

These prior art embodiments have many functional limitations, the most important of which relate to the irreversibility of the adaptations, in other words the general impossibility of removing the various types of insulation fittings, which drastically reduces the value of the vehicle in question, for example when it is to be sold for other purposes, or, especially, when it is to be leased.

Another disadvantage is that, when flat insulating slabs are used, there is a sacrifice of usable internal space, while large empty volumes remain at the positions of the recesses formed by the ribs and shape of the bodywork, and reduce the temperature coefficient K of the vehicle.

Moreover, if the aforesaid empty volumes are filled with polyurethane foam to resolve the problem of the low temperature coefficient K, the vehicle is thus irremediably damaged, since, among other problems, the electrical wiring is made inaccessible.

There is another characteristic which makes small vehicles less technically efficient than large vans and semi-trailers, all of which are characterized by refrigeration units with independent engines which are very expensive, are often noisy and are infrequently used in smaller vans.

This relates to the unfavourable ratio between the transported mass and the surface of the walls which, for the purposes of this comparison, has an effect on the capacity to maintain the temperature when the refrigeration is switched off, for the same temperature coefficient K, in other words for the same thickness and insulating characteristics of the walls.

By way of illustration, for a semi-trailer carrying 28 tonnes of frozen goods and having a total surface area of 150 m² the aforementioned ratio is 5.35 m² per tonne, while a small van which, for example, has 15 m² of walls and a capacity of 700 kg of frozen goods has a ratio of 21.4 m² per tonne between the transported mass and the wall surface, causing a loss, in terms of load heating, which is four times that of the semi-trailer. This means that, when the refrigeration is switched off, the period of no-power operation of the smaller vehicle, for the same acceptable increase in the load temperature, is 1/4 of that of the semi-trailer with the same temperature coefficient K.

There is also a further limitation, due to the ratio between the total wall surface and the surface of the doors of the vehicle. If this ratio is of the order of 23 to 1 in a semi-trailer (150 m² to 6.5 m² of doors), it decreases to a ratio of 7.5 to 1 in a small vehicle, causing more than three times the refrigeration loss whenever the doors are opened.

A small vehicle is also disadvantaged in terms of installed refrigeration capacity, since, whereas 7 thermal kW are normally sufficient for maintaining the temperature in a large vehicle, a small vehicle, having the same temperature coefficient K and a surface area equal to one tenth of that of the larger vehicle, will require at least 700 thermal watts, as well as the power required to compensate for the more frequent opening of the doors, making it necessary to install a 1000-1500 watt refrigeration unit although the useful capacity is 40 times smaller.

All of these factors indicate that small refrigerated vehicles without independent engines cannot maintain the refrigeration chain unless the engine is kept permanently switched on, since an involuntary stoppage, even for only two hours, during a driver's lunch break for example, may adversely affect the load, at least as far as the law is concerned, unless a very large auxiliary battery is fitted, which decreases the available space and payload.

The object of the present invention is to propose a solution to all these drawbacks, using a kit or set of components which have good insulation characteristics, and which are also designed to enable the insulated part to be fitted and removed without affecting the bodywork, while leaving the maximum useful volume within the load chamber or compartment, with the further object of providing a period of no-power operation equal to or comparable with that of large vehicles, without installing an independent engine or having the vehicle manned with the engine running.

Briefly, the invention which resolves all the problems listed above comprises a set of modules, preferably moulded from glass-reinforced plastic and foam-backed or filled with foam internally, with a structure adapted and customized for each type of van suitable for the purpose, having a suitable shape for filling all recesses in the bodywork, in such a way as to provide the maximum mean thickness for effective insulation. The said modules are preferably fitted by interlocking with screws or quick fasteners, for the doors, the whole being designed to meet the objective of enabling the insulated panelling to be fitted or removed in a limited time, possibly only a few minutes.

The invention can be supplemented if required with an additional device which connects the refrigeration unit, having an electric motor, to the propulsion engine, this device using suitable logic and circuitry to automatically start and switch off the engine according to the refrigeration requirements.

Because of the remarkable quietness of modern motive power systems and their conformity with strict pollution standards, this solution is better and much more satisfactory, as well as being more economical, than the alternative solution of providing an independent engine which, as is known, is generally noisier and more polluting.

Further characteristics and advantages of the invention will be made clear by the following detailed description, referring to the attached figures, provided purely by way of example and without restrictive intent, in which:
- Figure 1 is a longitudinal section through a vehicle provided with a fitting according to the present invention;
- Figure 2 is a cross section through the vehicle of Figure 1;
- Figure 3 shows, on an enlarged scale, a detail of a section through the joint between the side and the bottom of the floor of the fitting;
- Figure 4 shows a variant of the detail of Figure 3, with a snap fitting between the side and the bottom of the floor;
- Figure 5 shows another variant of the details of Figures 3 and 4, with an added joint;
- Figure 6 shows a detail of the rear door of the vehicle with a quick fastening of the fitting according to the present invention.

With reference to the figures, the number of parts making up the insulation of the van is preferably eight or nine, according to whether the rear door has two leaves or only one leaf hinged at the top.

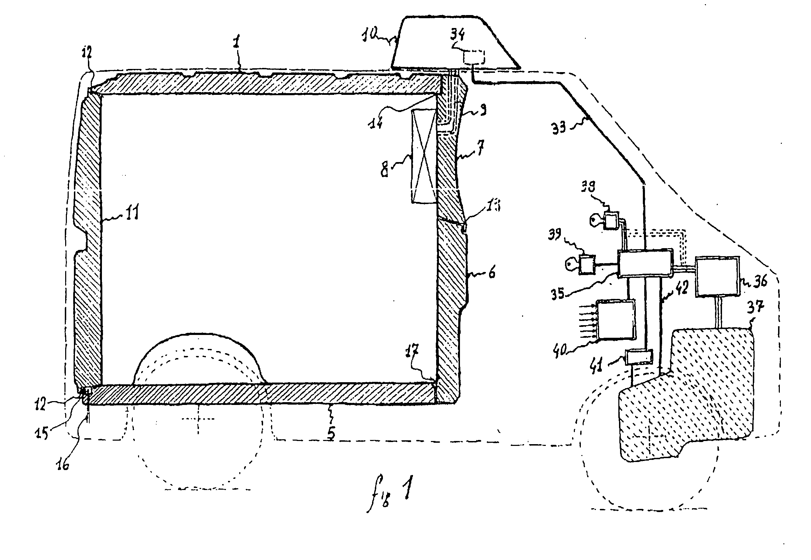

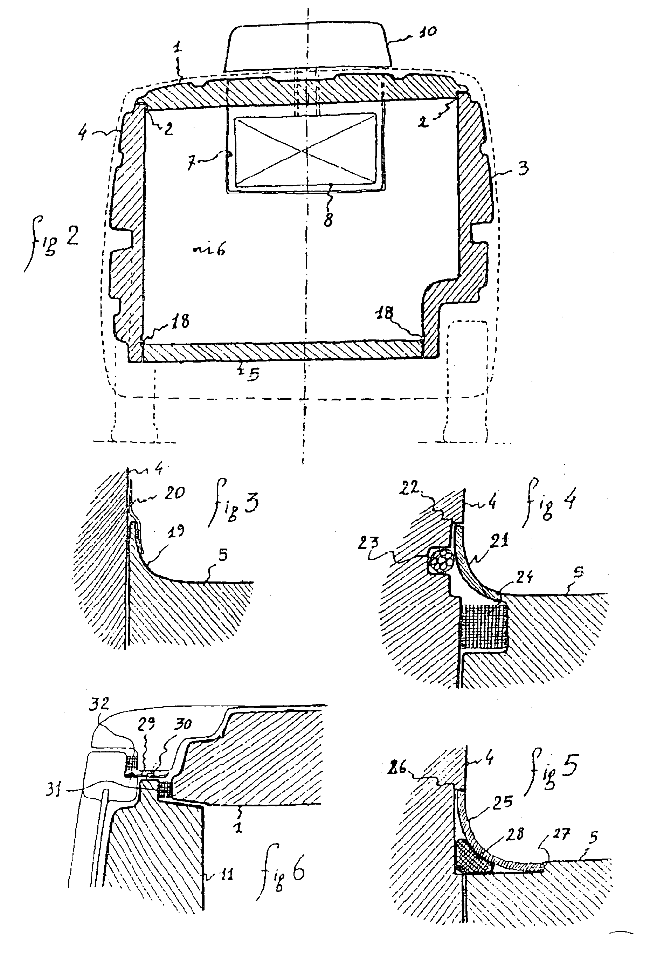

The positioning of the various parts by interlocking is shown in Figure 1, which represents a longitudinal section through the vehicle, and in Figure 2, which represents a cross section through the vehicle, both at the position of the wheel arch, shown on the right in the figure, and away from the wheel arch area, shown on the left in Figure 2.

A preferred, but not limiting, characteristic of the invention is that all the panels have substantially flat inner surfaces, to provide a useful volume having the shape of a regular parallelepiped, except at the points of the wheel arch protuberances, while the outer surfaces are shaped in such a way that they substantially fill all of the volumes which are formed by the ribs and box structure of the bodywork and which are accessible from inside the vehicle.

In particular, a pre-moulded element which substantially forms the whole ceiling 1 of the van is shown: this comprises two steps 2 for holding in place at least two side panels 3 and 4, which form the insulation of the right and left sides of the van respectively, and which in turn support the ceiling and hold it in place.

Another front panel or panels 6 and 7, whose outer dimensions preferably substantially match the outer profiles of the other panels, which are supported thereon and are thus held in place, also have a step 14 for supporting the roof or ceiling 1. A floor panel 5 completes the means for holding the two sides 3 and 4 and the front panel in place. The front panel can also be divided into two parts 6 and 7, of which one is U-shaped and is again easily removable, while the other, namely the module 7, is fixed permanently with screws to the dividing bulkhead of the van, since the evaporator of a refrigeration system 8 is mounted on it, this evaporator being connected with pipes and cables 9 to a motorized compressor and condenser unit 10, located externally, on top of the vehicle roof.

Thus if the van is to be used occasionally without the insulated panels fitted, these panels can be removed fairly quickly, possibly with the exception of the module 7 which remains in place because it supports the evaporator 8, but which can still be removed together with the compressor 10 (although this will take slightly longer) if, for example, there is a change of use of vehicle, without adversely affecting the original appearance and usability.

Figure 1 shows a longitudinal section through the vehicle which shows not only the panels described above, but also the door, or doors 11 with their sealing gaskets 12. It also shows how the rapidly removable front panel 6 bears in a sealed way 13 on the fixed panel 7, and shows the inclination of the separating surfaces, constructed and designed for rotation behind the removable front panel 6. The step 14, formed both on the front panel or module 6 and on the panel 7, preferably acts to support the forward or front side of the roof or ceiling 1. A channel 15 for collecting condensation or washing liquid which are discharged through the ducts 16 is also shown in the rear part on the floor.

The assembly sequence for the modules or panels requires, in addition to the installation of the front panel 7 and the corresponding refrigeration equipment which is both internal, for example the evaporator and connections 9, and external, for example the motorized compressor with the condenser 10, the initial installation of the front module or panel 6, following by the positioning of the ceiling 1, to be held in position by the insertion of the right side 3 and the left side 4 into the recesses 2, these sides being secured in turn by the installation of the floor module 5, which is fixed by stops 18, whose structure is described more fully below with reference to Figures 3 to 5. When the floor module 5 is in place, the fitting by interlocking of all the modules fixed to the bodywork is complete, without the use of screws or adhesive and without tools, and these modules can also be removed very quickly, in only a few minutes, if required.

As regards the panels to be fixed to the doors 11, whether these are rear doors or a side door if present, they can be fixed with screws and adhesives but are preferably fixed with a quick fastening system, as described in Figure 6, in order to provide these components with the characteristic of very fast fitting and removal.

With reference to the system for fixing the floor 7, Figure 3 shows a simple version in which the aforesaid floor has a rounded joint 19 along its lower edges, preferably both the side and the front edges, to avoid the presence of cracks and potential dirt traps in the lower part of the load compartment of the vehicle. A strip 20, preferably made from glass-reinforced plastic, or in the form of an adhesive strip which can be detached if necessary, acts both as a seal and as a means of securing the floor, to prevent accidentally lifting of the latter.

An alternative to the aforesaid strip 20 is shown in the variant of Figure 4, in which rounded joint has been lightened or reduced in thickness so that it becomes a strip having a degree of flexibility 21, preferably with adequate resilient pre-stressing, enabling this strip to deform so that it can slide on the wall and finally snap into a corresponding recess 22 where it is engaged, thus preventing the floor from being lifted and rising. Under the bearing point of the strip there is a channel which houses a cord 23 or other similar member, preferably a strong pre-stretched cable, whose function is to facilitate the removal of the floor by bringing the strip 21 out of the recess 22 when the cord is pulled. As regards the seal, the lightening of the strip 21 creates a cavity in which a gasket 24, preferably made from flexible expanded material, can be inserted, thus eliminating the necessity for the strip or adhesive strip.

A further alternative to this device is shown in Figure 5, where the place of the rounded joint of figure 3 is taken by an independent strip 25, which initially has a greater radius of curvature than that present in the assembled state, is provided and is inserted so that it bears against the two angles 26 and 27 formed on the side or front wall and on the floor respectively. A cylindrical gasket 28 initially has two functions, acting as a forcing spring, which helps to keep the strip 25 in position, and as a gasket for sealing between the floor and the side and forward or front walls. The resilience of this gasket 28, which allows it to be flattened, also assists the extraction of the strip 25 from its housing for the removal of the fitting.

Figure 6 shows a detail of the system for fixing the preformed panels to the doors, which constitutes a preferred but not exclusive characteristic, since it can also be provided with other devices, for example of the eccentric fastening type, for rapid removal of the fitting. A flexible strip 29, preferably riveted or fixed in any other way to the sheet steel of the door surround box structure, has a hole in which is engaged a pin 30 projecting from the edge of the module 11, preferably made from foam-backed glass-reinforced plastic, which forms the door insulation. To remove the module or panel 11, it is simply necessary to lift all the strips 29 which secure the four sides of the panel or panels 11 to the doors. A special gasket 31 is provided for insulation: it is of a different type from the original door gasket 32, being generally known and more suitable for preventing the formation of heat bridges, the original gasket being preferably kept in place as an additional protective element.

With reference to Figure 1, this shows a connection 33 which runs from a thermostat 34 inside the compressor 10 and connects it to a control unit 35, which in turn is connected to a unit 36 for controlling, for example, the fuel injection and ignition system of the engine 37. In functional terms, this thermostat 34, which controls the compressor of the refrigeration unit 10, also informs the control unit 35, containing the logic of the system, when the engine must be started because of the occurrence of a set of conditions relating to the security of the vehicle, with respect to the prevention of accidents or malfunctions, or the prevention of theft, a not insignificant consideration if the engine is to be left running in an unmanned vehicle. The first arrangement is to make the controller 35 inaccessible by functionally intercepting the starting control signals sent from the ignition key block 38. A key or switch 39 enables the automatic start function by means of a connection to the controller 35.

An improvement of the system consists in the use of a remote controller for the enabling unit 39, permission being given when it has been checked that all the doors are closed, including that of the engine compartment, and that no persons are present in the cab or in the load compartment. The vehicle's alarm system 40, with its anti-intruder devices, contacts and sensors, can provide this information through a connecting cable to the controller 35. In case of intrusion into the vehicle, the alarm is triggered, and activates in a known way a siren and/or any other warning devices, such as a mobile telephone call, and immediately cuts off the engine. Preferably, for greater security, the engine can be stopped by the operation of the gear shift, the clutch, the accelerator and the brake, by means of a special-purpose unit 41, or by taking the information from a pre-installed engine control unit.

Finally, and again preferably in order to provide redundancy, in case the preceding means should fail or prove ineffective, the mileometer or a pulse generator fitted down-line from the clutch can disable the engine ignition by means of a corresponding connection 42. To enable the vehicle to be used normally, it is necessary to operate the control 39, which will transfer the engine ignition back to the ignition key 38 and cancel all the other sources of disabling signals 40, 41 and 42, to permit starting, and will also eliminate the disabling of the compressor, when the engine is not running, subject to the presence of adequate residual charge in the traction battery, which is monitored for this purpose, again by the remote control unit 35. In some compressors, the control logic incorporates the last-mentioned function in a known way, so that this function does not have to be added to the unit 35.

For reasons of security of the transported load, it is also possible for the controller 35 to have an additional function consisting in the operation of an audible warning device, preferably briefly, for example one belonging to the alarm system, when the enabling unit 39 is not operated after all the doors have been closed and the engine turned off, within a few seconds for example.

In this way, in addition to preventing theft, the system will prevent the driver from being distracted by questions of the safety of the load or his own safety, since the automatic starting of the engine is prevented when the bonnet is open.

Clearly, provided that the principle of the invention is retained, the details of manufacture and the forms of embodiment can be varied widely without departure from the scope of the present invention.

## Claims

1. Fitting for insulated motor vehicle, comprising a set of thermal insulation elements comprising first surfaces for forming in combination, in an assembled configuration of the insulation elements, a compartment thermally insulated from the external environment, **characterized in that** the insulation elements also comprise second surfaces formed at least partially into generally irregular shapes which are capable of forming in combination, in the assembled configuration of the insulation elements, a casing surface which at least partially reproduces a corresponding portion of the irregular surface of a load compartment of a motor vehicle, at least two of the said insulation elements additionally comprising localized connecting profiles which can be connected to each other by interlocking.

2. Fitting for insulated motor vehicle according to Claim 1, **characterized in that** it also comprises connecting members which can be selectively interposed between the said localized connecting profiles of the said at least two insulation elements to form their connection by interlocking.

3. Fitting for insulated motor vehicle according to Claim 2, **characterized in that** the thermal insulation elements are prefabricated.

4. Insulated motor vehicle with a load compartment having an inner surface which is at least partially irregular, **characterized in that** it includes a fitting comprising a plurality of thermal insulation elements according to any one of the preceding claims, assembled to form, by the combination of their inner walls, a compartment which is thermally insulated from the inner surface of the load compartment and, by the combination of their outer walls, a casing surface which at least partially contacts a corresponding portion of the irregular inner surface of the load compartment.

5. System of components for the rapid conversion of a goods vehicle into an insulated vehicle, comprising a small number of insulating modules or elements, shaped to fill all the cavities of the bodywork of a load compartment of the vehicle, and capable of being fitted and removed by interlocking means or the like, and also comprising means for the automatic starting of the propulsion engine, these means being operable, even when the motor vehicle is stationary and unmanned, by a thermostat of a compressor of a refrigeration unit installed in the vehicle.

6. System of components according to Claim 5, **characterized in that** the aforesaid insulating modules or elements are fitted on the loading doors of the load compartment of the motor vehicle and on each of the front, side, upper and lower surfaces of the load compartment, according to an installation sequence which enables each insulating element installed in one step to be secured and retained in position by one or more insulating elements installed in other steps.

7. System of components according to Claim 6, **characterized in that** the insulation element for the upper surface comprises lateral interlocking means which secure by an interlocking fitting the insulation elements for the lateral surfaces, which in turn support the insulation element for the upper surface, which is supported in a front part by interlocking means provided on the insulation element for the front surface, the insulation element for the lower surface securing by an interlocking fitting the insulation elements for the side surfaces and the front surface, the insulation elements for the lateral surfaces and the upper surface securing by an interlocking fitting the insulation element for the front wall.

8. System of components according to Claim 6, **characterized in that** the aforesaid insulation element for the lower surface comprises, at the position of at least part of the lateral edges of the front edge, a rounded joint protecting the interstice formed with the adjacent insulation elements of the lateral and front surfaces.

9. System of components according to Claim 8, **characterized in that** a lightened area or recess is created in the said rounded joint, thus forming a flexible preformed joint portion which can be inserted into a corresponding compartment of an adjacent insulation element in which is provided a seat for a cord member capable of assisting the dismantling of the insulation elements, the said recess being designed to house a sealing gasket.

10. System of components according to Claim 8, **characterized in that** the aforesaid rounded joint of the floor comprises a removable flexible strip, kept resiliently in the inserted position, in use, by bearing on stops provided on the insulating elements of the lateral, front and lower surfaces, gasket means being provided at the position of the rounded joint to assist its interlocking and to ensure that the insulation element for the lower surface is fitted with a tight seal to the insulation elements of the lateral and front surfaces.

11. System of components according to Claim 5, **characterized in that** the aforesaid insulating modules or elements are made from glass-reinforced plastic and filled internally with polyurethane foam, or are made completely out of foam of varying density, having its maximum density on the inner skin, forming the walls of the compartment, and its minimum density in all other areas, including the shaped rear parts.

12. System of components according to Claim 11, **characterized in that** the aforesaid shaped insulating modules or elements comprise inner walls and lateral cornices of the rigid type, produced by hot vacuum forming of slabs of thermoplastic material, while the remainder, particularly the shaped rear areas, is formed from polyurethane foam whose adhesion to the mould is prevented by a highly flexible layer of felt or fabric.

13. System of components according to Claim 5, **characterized in that** the aforesaid automatic starting of the engine is controlled by a multi-function controller connected to the vehicle ignition key unit, to the engine, injection and starting control unit, to an enabling key or switch, and also to one or more elements selected from the group comprising the door alarm system, the engine compartment alarm system, the anti-intruder devices, the contacts which detect the operation of the brake, the parking brake, the clutch and the gear shift, and the mileometer.

14. System of components according to Claim 13, **characterized in that** the aforesaid multi-function controller is enabled only from outside the vehicle, by a remote controller, only when the doors are closed and the vehicle is empty, the necessity of operating the remote controller, several seconds after the closing of the doors of the motor vehicle, being possibly indicated by an audible signal.

15. System of components according to Claim 6, **characterized in that** the aforesaid insulation module or element for the front surfaces consists of at least two portions, at least one larger portion being substantially U-shaped and fitted by interlocking so that it is selectively removable from the motor vehicle together with the other insulation elements, at least one second portion being fixed to a corresponding portion of front wall to support an evaporator and to incorporate the corresponding connections to the compressor unit of a refrigeration installation mounted on the vehicle.
